# FASCICULE DE BREVET EUROPEEN

(11) **EP 1 366 320 B1**
(45) Date de publication et mention de la délivrance du brevet: **02.02.2005**
(21) Numéro de dépôt: 02716885.5
(22) Date de dépôt: 08.03.2002
(51) Int. Cl.: F16L 59/14

(54) **DISPOSITIF D'ISOLATION THERMIQUE D'AU MOINS UNE CONDUITE SOUS-MARINE COMPRENANT DES CLOISONS ETANCHES**
EINRICHTUNG ZUR WÄRMEISOLATION WENIGSTENS EINER UNTERSEELEITUNG MIT UNDURCHLÄSSIGEN TRENNELEMENTEN
THERMAL INSULATION DEVICE FOR AT LEAST ONE UNDERWATER PIPE COMPRISING SEALED PARTITIONS

(30) Priorité: 09.03.2001 FR 0103208
(43) Date de publication de la demande: 03.12.2003
(73) Titulaire: Saipem SA, 78180 Montigny-le-Bretonneux (FR)
(72) Inventeur: HALLOT, Raymond, F-13600 La Ciotat (FR); ROCHER, Xavier, F-78400 Chatou (FR); NGUYEN, Xuan Chi, F-92410 Ville d'Avray (FR)
(74) Mandataire: Domange, Maxime
(86) Numéro de dépôt international: PCT/FR2002/000838
(87) Numéro de publication internationale: WO 2002/073084

(56) Documents cités:
- EP-A- 0 400 689
- WO-A-00/40886
- DE-A- 2 518 940
- GB-A- 2 263 752

## Description

La présente invention concerne des dispositifs et procédés d'isolation thermique d'au moins une conduite sous-marine à grande profondeur.

Elle concerne plus particulièrement les conduites reliant le fond de la mer à des installations ancrées flottant en surface.

Le secteur technique de l'invention est le domaine de la fabrication et du montage de systèmes d'isolation à l'extérieur et autour des conduites dans lesquelles circulent des effluents chauds dont on veut limiter les déperditions de chaleur.

Cette invention s'applique plus particulièrement aux développements de champs pétroliers en mer profonde, c'est à dire des installations pétrolières installées en pleine mer, dans lesquelles les équipements de surface sont en général situés sur des structures flottantes, les têtes de puits étant au fond de la mer. Les conduites concernées par la présente invention étant plus particulièrement les risers ou conduites de liaison fond-surface remontant vers la surface, mais aussi les conduites reliant les têtes de puits auxdites conduites de liaisons fond surface.

Les développements en mer profonde sont effectués par des profondeurs d'eau atteignant actuellement 1500 m. Les développements futurs sont envisagés par des profondeurs d'eau jusqu'à 3000-4000m et au delà.

L'application principale de l'invention est l'isolation thermique de conduites ou canalisations immergées, sous-marines ou subaquatiques, et plus particulièrement à grande profondeur, au-delà de 300 mètres, et véhiculant des produits pétroliers chauds dont un trop grand refroidissement serait problématique aussi bien en régime de production normale qu'en cas d'arrêt de production.

En effet dans ce type d'applications, de nombreux problèmes se posent si la température des produits pétroliers diminue d'une valeur significative importante par rapport à leur température de production qui est souvent au-delà de 60 à 80°C alors que la température de l'eau environnante surtout à grande profondeur peut être largement inférieure à 10°C et atteindre 4°C. Si les produits pétroliers se refroidissent par exemple en dessous de 30° à 60°C pour une température initiale de 70 à 80°C on observe en général :
- une forte augmentation de la viscosité qui diminue alors le débit de la conduite,
- une précipitation de paraffine dissoute qui augmente alors la viscosité du produit et dont le dépôt peut diminuer le diamètre intérieur utile de la conduite,
- la floculation des alphaltènes induisant les mêmes problèmes,
- la formation soudaine, compacte et massive d'hydrates de gaz qui précipitent à forte pression et faible température, obstruant ainsi brusquement la conduite.

Paraffines et asphaltènes restent accrochés à la paroi et nécessitent alors un nettoyage par raclage de l'intérieur de la conduite ; en revanche, les hydrates sont encore plus difficiles, voire même parfois impossibles à résorber.

L'isolation thermique de telles conduites a donc pour fonction de retarder le refroidissement des effluents pétroliers véhiculés non seulement en régime de production établi, pour que leur température soit par exemple d'au moins 40°C en arrivant en surface, pour une température de production à l'entrée de la conduite de 70°C à 80°C, mais également en cas de diminution ou même d'arrêt de la production, afin d'éviter que la température des effluents ne descende par exemple en dessous de 30°C, afin de limiter les problèmes ci-dessus, ou tout au moins de permettre de les rendre réversibles.

Dans le cas de l'installation de conduites uniques ou de faisceaux de conduites (appelés communément « bundles »), on préfère en général préfabriquer lesdites conduites à terre en longueurs unitaires de 250 à 500 m, que l'on tire ensuite depuis le large à l'aide d'un remorqueur. Dans le cas d'une liaison fond-surface de type tour, la longueur de conduite représente en général de 50 à 95% de la hauteur d'eau, c'est à dire qu'elle peut atteindre 2400m pour une profondeur d'eau de 2500m. Lors de sa fabrication à terre, on tire depuis la mer la première longueur unitaire que l'on raboute à la suivante, le remorqueur maintenant l'ensemble en traction pendant la phase de raboutage, laquelle peut durer plusieurs heures, voire plusieurs jours. Lorsque l'intégralité de la conduite ou du faisceau de conduites a été mis à l'eau, l'ensemble est remorqué vers le site, en général en subsurface, sensiblement à l'horizontale, où il est alors « cabané », c'est à dire basculé en position verticale, pour atteindre la position verticale, puis il mis en place en position définitive.

On connaît un dispositif d'isolation d'au moins une conduite sous marine (qui peut être en effet seule ou assemblée avec d'autres conduites, constituant alors ce que l'on appelle des « bundles » ou des « faisceaux »), destinée à être posée sur le fond à grande profondeur, comportant un revêtement extérieur isolant entourant celle-ci et une enveloppe de protection.

L'isolation de la ou des conduites ou du faisceau de conduite communément dénommé « bundle » est alors protégée par une enveloppe extérieure qui a une double fonction :
- d'une part d'éviter les endommagements qui peuvent se produire lors de la fabrication ou lors du remorquage comme lors de la pose, surtout dans les zones de faible profondeur d'eau, ledit remorquage pouvant dans certains cas se faire sur des distances de plusieurs centaines de kilomètres. A cet effet, on utilise des matériaux assez résistants tels qu'en acier, en composé thermoplastique ou thermodurcissable ou encore en matériau composite ;
- d'autre part de créer un confinement étanche autour du système d'isolation. Ce confinement est nécessaire dans le cas de revêtements extérieurs isolants constitués de matériaux sujets à migration, voire comprenant des composés fluides.

En effet, par des fonds de 2000 m, la pression hydrostatique est de l'ordre de 200 bars, soit 20 Méga Pascals, ce qui implique que l'ensemble des conduites et de leur revêtement en matériau isolant doit être capable de résister non seulement à ces pressions sans dégradation lors des pressurisations et dépressurisations de la conduite dans laquelle circule le fluide chaud, mais encore aux cycles de température lesquels engendrent des variations de volume des différents composants, et donc de pressions positives ou négatives pouvant conduire à la destruction partielle ou totale de l'enveloppe soit par dépassement des contraintes admissibles, soit par implosion de cette enveloppe externe (variations de pression interne négatives).

On connaît le procédé et le dispositif décrits dans le brevet FR99/00985 et WO 00/40886, qui décrit un matériau d'isolation à changement de phase solide-liquide et chaleur latente de fusion, capable de restituer des calories à la conduite interne, et confiné au sein d'une enveloppe étanche et déformable, ce qui la rend capable de suivre l'expansion et la contraction des divers composants sous l'influence de tous les paramètres d'environnement, dont les températures interne et externe. La conduite est ainsi soit confinée au sein d'une enveloppe souple thermoplastique, notamment en polyéthylène ou polypropylène, par exemple circulaire, l'accroissement ou la réduction du volume intérieur, dû aux variations de température, comparable à une respiration est absorbée par la souplesse de l'enveloppe constituée par exemple d'un matériau thermoplastique présentant une grande limite élastique. Pour résister aux contraintes mécaniques, on utilise de préférence une enveloppe semi-rigide constituée d'un matériau résistant tel l'acier ou un matériau composite, tel qu'un composé réalisé à partir d'un liant tel qu'une résine époxy et des fibres minérales ou organiques telles que des fibres de verre ou de carbone, mais alors on donne au faisceau une forme ovoïde ou aplatie, avec ou sans contre-courbure, ce qui lui confère, à périmètre constant, une section inférieure au cercle correspondant. Ainsi, la « respiration » du faisceau, conduira, dans le cas d'une augmentation et d'une réduction du volume, respectivement à une « remise au rond » de l'enveloppe, ou à une accentuation de l'aplatissement de ladite enveloppe. Dans ce cas, l'ensemble faisceau-enveloppe est désignée par le terme « bundle plat », par opposition à une enveloppe circulaire.

On connaît aussi le procédé utilisé sur le champ de GANET, qui consiste à préfabriquer à terre un bundle circulaire étanche, vide de complexe isolant, mais rempli d'un gaz inerte, puis à le remorquer sur site et à l'installer en grande profondeur, pour enfin le remplir d'un composé isolant à base de mono-éthylène glycol additionné d'agents viscosifiants. Pour absorber les variations de volume créées par les variations de température, sans créer de contraintes inacceptables dans l'enveloppe circulaire en acier, une conduite déformable, pressurisée à l'azote a été installée au sein du bundle, tout le long de ce dernier.

Ces réalisations antérieures, en particulier le document GB 2 263 752, ont été décrites pour des applications dans lesquelles la conduite repose horizontalement sur le fond de la mer.

Dans le cas d'une liaison fond-surface, par exemple la portion verticale d'une tour ou encore la section en chaînette reliant le sommet de la tour au support de surface, ou encore des conduites reposant sur une forte déclivité du fond de la mer, la pression extérieure varie le long de la conduite et décroît au fur et à mesure que l'on remonte vers la surface. Dans le cas de matériaux isolants pâteux ou fluides, ce dernier présentant une densité inférieure à celle de l'eau de mer, en général une densité de 0.8 à 0.85, la pression différentielle entre l'extérieur et l'intérieur variera le long de la dite conduite, augmentant au fur et mesure que l'on monte vers la surface. Ainsi, il s'en suit des déformations accentuées dans les parties présentant le maximum de pression différentielle, induisant ainsi d'importants transferts de fluide parallèlement à l'axe longitudinal de ladite conduite. En outre, les transferts sont amplifiés par les phénomènes de « respiration » dus aux variations de température tels que décrits ci-dessus.

Un « bundle plat » est sensible aux variations de pression dues aux déclivités : surpression en bas, dépression en haut, et la phase de remorquage est critique, car la longueur pouvant atteindre plusieurs kilomètres, le « bundle » n'est en fait jamais parfaitement à l'horizontal et il en résulte des variations de pression différentielle importantes lors dudit remorquage et surtout lors de l'opération de cabanage.

Quand le « bundle » est en position verticale ou au fond de la mer sur une déclivité importante, le différentiel de pression créé par la faible densité du matériau isolant, associé à la variation de volume créée par l'expansion thermique du matériau isolant, engendre des mouvements du matériau isolant que doit pouvoir supporter l'enveloppe extérieure. On cherche à éviter les mouvements de particules parallèlement à l'axe du bundle, c'est à dire les migrations de matériau isolant entre deux zones distantes du « bundle », car ils risquent de détruire la structure proprement dite du matériau isolant.

Pour que le « bundle » ait un bon comportement pendant toute sa durée de vie, il est souhaitable qu'il ne comporte pas de gaz résiduel. En effet, dans le cas de complexe isolant pâteux ou semi-fluide, toute poche de gaz résultant du processus de fabrication aura des répercussions, d'une part sur le transport, car, dès que le « bundle » est en remorquage à profondeur importante, la pression ambiante comprime le gaz résiduel, ce qui risque de réduire de manière significative la flottabilité, pouvant ainsi conduire à des situations dangereuses non seulement pour les matériels mais aussi pour le personnel ; d'autre part, lors de la mise en position verticale, toutes les poches de gaz comprimé se rassemblent vers le haut du « bundle », risquant ainsi de créer une longueur significative de conduite dépourvue de composant isolant.

Le but de la présente invention est de pouvoir fabriquer au meilleur coût un « bundle » à terre, de pouvoir mettre en place un revêtement en matériau isolant de type semi-fluide ou pâteux, de le remorquer en subsurface, de le cabaner en position verticale pour l'installer, tout en respectant l'intégrité de l'ensemble jusqu'à sa mise en production et pendant toute sa durée de vie, qui dépasse en général 30 années.

Un autre but est de pouvoir réaliser une isolation d'au moins une conduite sous-marine destinée à être posée sur le fond, en particulier à grande profondeur, en particulier dans des zones à forte déclivité, à partir d'une enveloppe de type « bundle plat » étanche, capable de fournir une souplesse transversale importante pour absorber les variations de volume, tout en conservant une rigidité longitudinale suffisante pour autoriser les manutentions, telles la préfabrication à terre, le remorquage vers le site, et la conservation de l'intégrité mécanique de ladite enveloppe pendant toute la durée de vie du produit, laquelle atteint et dépasse 30 ans.

Le problème posé est donc de minimiser les migrations longitudinales des matériaux isolants sujets à migration, ce qui est particulièrement important dans le cas où ledit matériau isolant est semi-fluide ou pâteux notamment du type matrice isolante gélifiée, en raison des risques de dégradation des performances du complexe isolant dès lors que des cisaillements internes inconsidérés sont appliqués à ladite matrice isolante.

Pour ce faire, la présente invention a pour objet un dispositif d'isolation thermique selon la revendication 1.

Cette structure rigide solidaire de l'enveloppe empêche le déplacement de ladite enveloppe en regard de ladite cloison et par rapport à celle-ci et fige donc la géométrie de la section transversale de l'enveloppe au niveau de ladite cloison.

On entend par « étanche » et « fermé » que ladite cloison ne permet pas le passage de la matière constituant ledit revêtement isolant à travers ladite cloison, et qu'en particulier, la jonction entre ladite conduite et les orifices à travers lesquels ladite conduite traverse ladite cloison ne permet pas le passage de ladite matière du revêtement isolant.

Lesdites cloisons étanches assurent le confinement du matériau isolant constituant ledit revêtement isolant entre ladite enveloppe et lesdites cloisons.

On entend par « section transversale » la section dans un plan XX', YY' perpendiculaire audit axe longitudinal ZZ' de ladite enveloppe.

Dans un mode de réalisation particulier, ladite structure fermée de ladite cloison transversale étanche comprend une pièce cylindrique qui présente une section transversale, dont le périmètre présente la même forme fixe que celui de ladite section transversale de l'enveloppe.

On entend dans la présente description par « périmètre de la section transversale », la ligne en forme de courbe fermée qui délimite la surface plane définie par ladite section transversale.

Le périmètre de la section transversale de l'enveloppe au niveau des cloisons étanches est de forme fixe et ne peut donc pas se déformer par contraction ou par expansion de ladite enveloppe à ce niveau.

Selon différentes variantes de réalisation, ladite section transversale de l'enveloppe est de forme circulaire, ou de forme ovale, ou encore de forme rectangulaire, de préférence avec des angles arrondis.

Dans le cas où le dispositif comporte au moins deux conduites disposées suivant un même plan, la section transversale de ladite enveloppe est de préférence de forme allongée dans la même direction que ce plan.

Plus particulièrement, le périmètre externe de la section transversale de ladite enveloppe de protection est une courbe fermée dont le rapport du carré et de la longueur sur la surface qu'elle délimite est au moins égal à 13, comme décrit dans FR99/00985.

Lors des variations de volume interne, l'enveloppe aura tendance à se déformer vers une forme circulaire, laquelle constitue mathématiquement la forme présentant, à périmètre constant, la surface la plus importante.

Dans le cas d'une enveloppe étanche à profil circulaire, une augmentation de volume engendre des contraintes dans la paroi, lesquelles sont liées à l'augmentation de pression résultante de cette augmentation de volume.

En revanche, si on aplatit la forme de la section transversale du revêtement extérieur, meilleure est la capacité de son enveloppe à absorber les expansions dues à la dilatation des différents composants sous l'effet de la température, sans créer de surpression significative, car l'enveloppe a la possibilité de se remettre au rond.

Dans le cas de profil de forme ovale, une variation de pression interne impliquera une combinaison de contraintes de flexion et de contraintes de traction pure, car la courbure variable de l'ovale se comporte alors comme une voûte architecturale avec cependant la différence que dans le cas de notre enveloppe, les contraintes sont des contraintes de traction et non des contraintes de compression. Ainsi, une forme ovale ou approchée d'une ovale sera envisageable pour de faibles capacités d'expansion et il conviendra de considérer alors des ovales avec un rapport de longueur du grand axe pmax sur celle du petit axe pmin aussi élevé que possible par exemple au moins 2/1 ou 3/1.

On sélectionnera alors la forme de l'enveloppe en fonction de l'expansion globale du volume du revêtement extérieur isolant, sous l'effet de variations de température. Ainsi, pour un système d'isolation utilisant principalement des matériaux sujets à expansion une forme rectangulaire, une forme polygonale ou encore une forme ovale permet une expansion par flexion de la paroi tout en induisant un minimum de contraintes de traction dans l'enveloppe extérieure.

Pour un matériau isolant présentant une grande expansion sous l'effet de variations de température, tel que du gazole, des produits de la famille des alcanes (paraffines), ou encore des matériaux à changement de phase, on aplatira avantageusement le rectangle pour créer la réserve d'expansion nécessaire. On peut encore augmenter cette réserve d'expansion en créant de façon connue des contre-courbures.

On entend ici par « matériau isolant » un matériau présentant de préférence une conductivité thermique inférieure à 0.5 W x m⁻¹ x K⁻¹, de préférence encore entre 0.05 et 0.2 W x m⁻¹ x K⁻¹, K (Watt/mètre/Kelvin).

On entend par « matériau sujet à migration » un matériau liquide, pâteux ou de consistance solide, telle que la consistance d'une graisse, d'une paraffine ou d'un gel, qui est susceptible d'être déformé par les contraintes résultant de pressions différentielles entre deux points distincts de l'enveloppe et/ou de variations de température au sein dudit matériau isolant.

On connaît différents matériaux isolants thermiques pouvant constituer des revêtements isolants selon l'invention.

Il s'agit le plus souvent de complexes isolants, comprenant un premier composé tel qu'un composé hydrocarboné comme la paraffine ou le gazole, de préférence en mélange avec un second composé gélifiant et/ou à effet structurant, notamment par réticulation, tel qu'un second composé du type polyuréthane.

On peut citer plus particulièrement comme premiers composés les composés chimiques de la famille des alcanes, tels que des paraffines ou des cires, des bitumes, des goudrons, des alcools gras, des glycols, plus particulièrement encore des composés dont la température de fusion des matériaux est comprise entre la température t₁ des effluents chauds circulant dans une des conduites et la température t₂ du milieu environnant de la conduite en opération, soit en fait en général une température de fusion comprise entre 20 et 80°C. On utilise par exemple comme paraffine du tétracosane de formule C₂₄H₅₀ présentant une température de fusion d'environ 50°C.

Lesdites cloisons créent des ponts thermiques. On recherche donc à les espacer le plus possible pour réduire les ponts thermiques.

Dans un mode particulier de réalisation, l'espacement entre deux dites cloisons étanches successives selon ledit axe longitudinal ZZ' de ladite enveloppe est de 50 à 200 mètres, notamment de 100 à 150 mètres.

Pour réduire le nombre de cloisons étanches, selon une caractéristique préférentielle, un dispositif selon l'invention comprend au moins un, de préférence une pluralité, de gabarit(s) conformateur(s) disposé(s) transversalement audit axe longitudinal (ZZ') constitué(s) d'une structure rigide ouverte solidaire de la ou desdites conduite(s) et traversée par celle(s)-ci et solidaire de ladite enveloppe à sa périphérie, disposé(s) entre deuxdites cloisons étanches successives, de préférence à intervalles réguliers le long dudit axe longitudinal ZZ', ledit gabarit conformateur présentant de préférence des ouvertures permettant le passage de la matière constitutive dudit revêtement isolant à travers ledit gabarit conformateur.

Comme ladite cloison étanche, ledit gabarit conformateur fige la forme de la section transversale de l'enveloppe au niveau dudit gabarit conformateur, tout en minimisant les ponts thermiques.

Plus particulièrement ladite structure ouverte dudit gabarit conformateur comprend une pièce cylindrique qui présente une section transversale dont le périmètre s'inscrit dans une figure géométrique identique à la figure géométrique définie par la forme du périmètre de la section transversale de ladite cloison étanche.

De préférence, un dispositif selon l'invention comporte une pluralité de gabarits conformateurs disposés le long dudit axe longitudinal ZZ' de l'enveloppe de préférence à intervalles réguliers, deux gabarits conformateurs successifs étant espacés de préférence encore de 5 à 50 mètres, de préférence 5 à 20 mètres.

Selon une caractéristique principale de la présente invention, le dispositif comprend au moins un gabarit centraliseur, de préférence une pluralité de gabarits centraliseurs, disposé(s), transversalement audit axe longitudinal ZZ', de préférence à intervalles réguliers, entre deuxdites cloisons étanches successives et/ou entre deuxdits gabarits conformateurs le long dudit axe longitudinal ZZ', chaque gabarit centraliseur étant constitué d'une pièce rigide solidaire de la ou desdites conduite(s) et présentant une forme qui autorise un déplacement limité de ladite enveloppe, en contraction et en expansion, au regard dudit gabarit centraliseur, ladite pièce rigide du gabarit centraliseur présentant une surface externe, de préférence une surface externe cylindrique, dont le périmètre de la section transversale est en retrait par rapport à celui de ladite cloison étanche, et limite les déformations de ladite enveloppe par butée mécanique directe de celle-ci sur ladite pièce rigide, de préférence par butée mécanique, en au moins deux points opposés du périmètre de la section transversale de ladite enveloppe.

Ce gabarit centraliseur vise à assurer un enrobage minimum en revêtement isolant (3) autour de la ou desdites conduite(s) en cas de déformation par contraction de l'enveloppe et transfert de ladite matière fluable entre les deuxdites cloisons étanches et/ou entre deuxdits gabarits conformateurs.

Plus particulièrement, ledit gabarit centraliseur présente une section transversale dont le périmètre s'inscrit à l'intérieur d'une figure géométrique qui est sensiblement homothétique par rapport à la figure géométrique définie par le périmètre de la section transversale de ladite cloison étanche.

Dans un mode de réalisation, ladite pièce rigide constituant ledit gabarit centraliseur présente une partie de sa surface externe suffisamment en retrait par rapport à la surface de l'enveloppe, et/ou présente des perforations le traversant, de manière à créer un espace qui permette le transfert de matière constitutive dudit revêtement isolant à travers ledit gabarit centraliseur.

La distance entre deux gabarits centraliseurs le long dudit axe longitudinal ZZ' est telle qu'elle permet d'assurer de maintenir une quantité de matière constituant ledit revêtement isolant, suffisante pour assurer l'enrobage minimum nécessaire à l'isolation thermique de ladite conduite, compte tenu des déformations en contraction supportées par ladite enveloppe.

Avantageusement, le dispositif selon l'invention comporte une pluralité de gabarits centraliseurs, et deux gabarits centraliseurs successifs sont espacés le long dudit axe longitudinal ZZ' de l'enveloppe d'une distance de 2 à 5 mètres.

La présente invention a plus particulièrement pour objet un dispositif selon l'invention comprenant au moins deuxdites conduites sous-marines disposées en parallèle.

Dans ce cas, avantageusement, lesdites cloisons étanches de gabarit conformateur et gabarit centraliseur maintiennent les au moins deuxdites conduites sous marines à distance fixe l'une de l'autre.

La présente invention a également pour objet un dispositif d'isolation thermique unitaire selon la revendication 18.

La présente invention a enfin pour objet un procédé d'isolation thermique d'au moins une conduite sous-marine, caractérisé en ce qu'on réalise des dispositifs d'isolation thermique unitaires décrits ci-dessus, et on les assemble bout à bout les dispositifs d'isolation thermique unitaires tels que décrits ci-dessus.

Dans un mode préféré de réalisation, ledit matériau isolant est un complexe comprenant différents composants qui sont mélangés, puis injectés à l'état liquide au sein des différents compartiments délimités par deux dites cloisons étanches successives et ledit matériau isolant se transforme en gel par réticulation d'au moins un de ses dits composants.

Ce type de matrice gélifiée a par effet de limiter la convection.

D'autres caractéristiques et avantages de la présente invention ressortiront mieux à la lecture de la description qui va suivre, faite de manière illustrative et non limitative, en référence aux dessins annexés sur lesquels :
Les figures 1, 2 et 3 sont des vues en coupe d'une section transversale d'un faisceau dont la section transversale de l'enveloppe est de forme circulaire (figure 1) rectangulaire à bords arrondis (figures 2) et ovale (figure 3).
La figure 4 est une vue de côté d'un dispositif selon l'invention dans le cas d'une application dans une colonne montante.
Les figures 5, 6 et 7 sont des vues en coupe montrant la section transversale du dispositif au niveau a-b-d et e de la figure 4, respectivement pour chacun des types de dispositifs à enveloppe circulaire (figure 5), enveloppe ovale (figure 6) et enveloppe rectangulaire à bords arrondis (figure 7).
Les figures 8, 9 et 10 représentent les différentes étapes d'obtention d'un dispositif à enveloppe ovale (figure 10) à partir d'un dispositif à enveloppe circulaire (figure 8) en réalisant une déformation au delà de la limite élastique (figure 9).
Les figures 11, 12 et 13 sont des vues en coupe d'une section transversale d'un dispositif à enveloppe ovale, au niveau d'une cloison étanche (figure 11) et au niveau d'un gabarit centraliseur (figures 12 et 13), ladite enveloppe étant en phase de contraction (figure 12) et en phase d'expansion (figure 13).
La figure 14 est une vue de côté d'un dispositif selon l'invention présentant plusieurs cloisons étanches de gabarit centraliseur et gabarit conformateur.
Les figures 15, 16 et 17 représentent une vue en coupe d'une section transversale d'un dispositif selon l'invention, comprenant une enveloppe de forme rectangulaire à angles arrondis au niveau d'un gabarit centraliseur, respectivement au repos (figure 15), en configuration d'expansion de l'enveloppe (figure 16) et en configuration de contraction de l'enveloppe (figure 17).
Les figures 18 et 19 représentent respectivement la vue en coupe (figure 18) et la vue de côté (figure 19) d'un dispositif selon l'invention comprenant une enveloppe de type rectangulaire à bords arrondis équipé d'un écran extérieur lui conférant une forme circulaire, le petit écran étant lui-même équipé d'hélices antivortex.
La figure 20 est une vue en coupe longitudinale d'un dispositif selon l'invention présentant une cloison étanche, un gabarit centraliseur et un gabarit conformateur.
Les figures 21 et 22 représentent respectivement une vue en coupe longitudinale (figure 21) et vue de dessus (figure 22) d'un gabarit centraliseur ou conformateur comprenant une pièce rigide à structure ouverte de type roue de bicyclette à rayons.

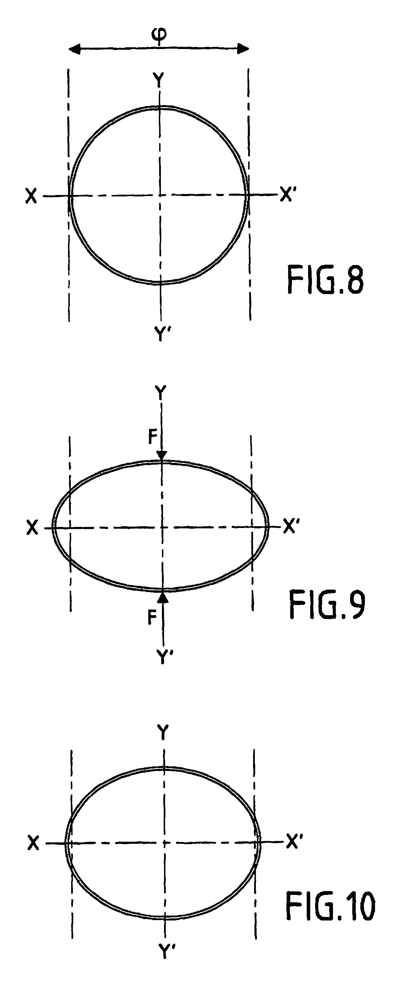

Les figures 8, 9 et 10 représentent la section de l'enveloppe externe en acier d'un bundle, respectivement de forme circulaire après fabrication (figure 8), puis déformée au delà de la limite élastique, à la presse sous un effort F, enfin sous forme légèrement aplatie après relâchement de l'effort F (figure 9), ce qui constitue alors l'enveloppe extérieure d'un « bundle plat » de section sensiblement ovale (figure 10).

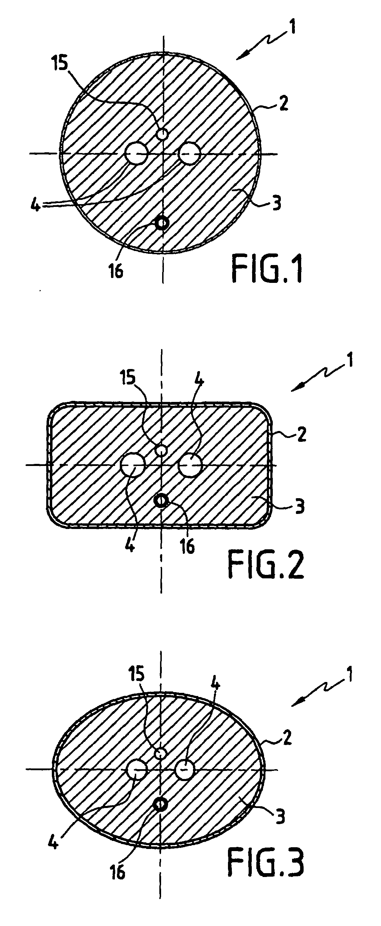

La figure 1 est la vue en coupe de la section transversale d'un dispositif selon l'invention composé d'une enveloppe extérieure 2 circulaire souple en matériau thermoplastique contenant un matériau isolant 3 sujet à migration, par exemple un matériau pâteux du type paraffine, au centre duquel sont disposées deux conduites de production d'effluents pétroliers 4, ainsi qu'une conduite auxiliaire de réchauffage 15 et un câble électrique 16.

Dans les figures 2 et 3, les mêmes conduites 4 et 15 et câbles 16 sont disposés au sein d'un bundle plat en tôle d'acier ou en matériau composite, l'enveloppe extérieure 2 ayant respectivement la forme d'un rectangle à bords arrondis (figure 2) ou sensiblement la forme d'une ellipse (figure 3).

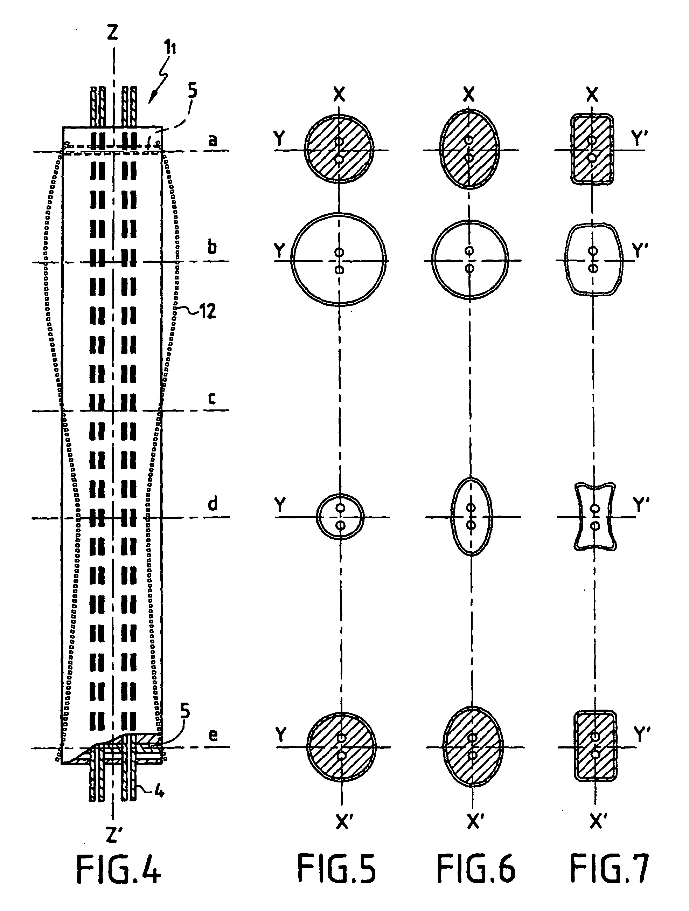

La figure 4 est une vue de face d'une portion de colonne montante ou « riser » isolée thermiquement 1₁, comportant une enveloppe extérieure 2 soit en matériau thermoplastique, soit en acier ou encore en matériau composite, dont la section peut être circulaire comme détaillé sur la figure 5, ou elliptique comme détaillé sur la figure 6, ou encore rectangulaire à bords arrondis comme détaillé sur la figure 7.

Ladite portion de colonne montante 1₁ comporte deux conduites 4 installées vers le centre ainsi qu'en partie supérieure (a) et en partie inférieure (b) une cloison étanche 5 servant à confiner, en coopération avec l'enveloppe externe 2, le matériau isolant 3. Ladite cloison étanche 5 supporte lesdites conduites 4 et les maintient à distance fixe l'une de l'autre et à distance fixe de la paroi.

Sur toutes les figures, on a présenté un dispositif d'isolation thermique de deux conduites sous marines comportant un dispositif d'isolation thermique d'au moins une conduite sous-marine comportant :
- un revêtement isolant entourant ladite ou lesdites conduite(s),
- ledit revêtement étant recouvert d'une enveloppe étanche de protection, et
- ladite enveloppe étant de forme tubulaire et présentant un axe longitudinal de symétrie ZZ', la section transversale de ladite enveloppe définissant un périmètre présentant deux axes de symétrie XX' et YY' perpendiculaires entre eux, et audit axe longitudinal ZZ'.

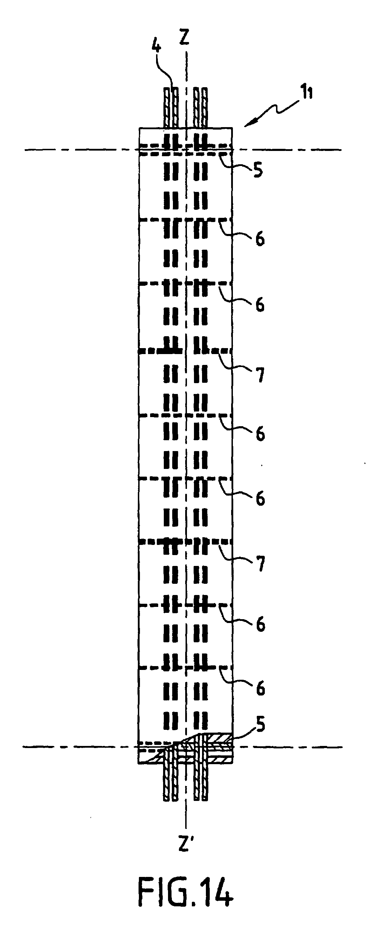

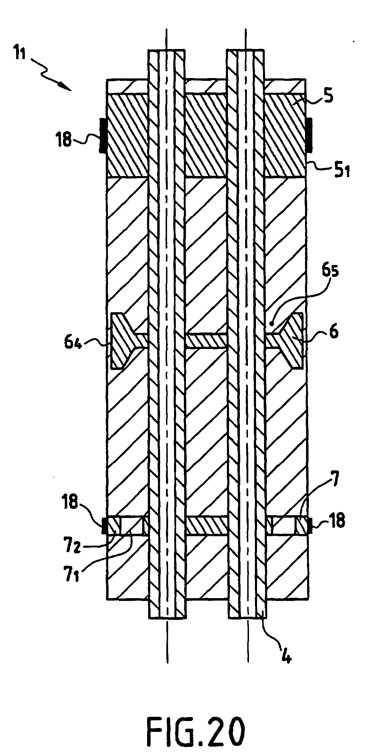

Sur les figures 4 et 14, on a représenté une portion ou tronçon d'un dispositif d'isolation thermique 1₁ dénommé ci-dessus dispositif d'isolation thermique unitaire, qui comprend deux cloisons étanches 5, et une pluralité de gabarits centraliseurs 6 ou gabarits conformateurs 7. Les cloisons étanches 5, gabarits centratiseurs 6 et gabarits conformateurs 7, sont des pièces rigides de forme cylindrique comme représenté sur la figure 20.

Sur les figures 5, 6, 7 et 11, la pièce rigide constituant la cloison étanche présente une section transversale de même forme que celui de la section transversale de l'enveloppe. Sur la figure 20, la hauteur de la pièce rigide cylindrique constituant la cloison étanche 5 est d'au moins un quart, de préférence environ la moitié de son diamètre, de manière à ce que la surface de contact 5₁ avec l'enveloppe par laquelle la cloison étanche est rendue solidaire à l'enveloppe soit suffisamment grande. La cloison étanche 5 est traversée par les conduites 4. La liaison entre la cloison étanche et les conduites 4 est elle aussi étanche, ce qui rend possible le confinement sans fuite au sein de l'enveloppe du matériau isolant. La cloison étanche 5 possède une résistance mécanique telle qu'elle fige la section de l'enveloppe extérieure à ce niveau (niveaux a et d figure 4). La surface externe cylindrique 5₁ de la pièce rigide constitutive de la cloison étanche 5 est collée ou soudée à l'enveloppe, mais avantageusement, elle peut être également en complément encerclée par un feuillard de cerclage extérieur 18 à l'extérieur de l'enveloppe à ce niveau.

Lesdites cloisons étanches sont des structures distinctes de ladite enveloppe, laquelle présente une continuité dans la direction longitudinale entre deux points situés de part et d'autre de ladite cloison.

Dans l'espace confiné entre deux cloisons étanches 5 dudit tronçon 1₁ sont disposés d'une part les gabarits centraliseurs 6 et d'autre part des gabarits conformateurs 7.

Les gabarits centraliseurs sont disposés de préférence à intervalles réguliers, par exemple d'une distance de 2 à 5 mètres. Ils sont également composés d'une pièce rigide solidaire des conduites internes 4, la forme des gabarits centratiseurs autorise un déplacement limité de l'enveloppe 2 en contraction et en expansion au regard dudit gabarit centraliseur 6, plus particulièrement ledit déplacement de l'enveloppe 2 en regard d'undit gabarit centraliseur 6, représente une variation de 0,1 à 10 %, de préférence de 0,1 à 5 %, de la distance entre deux points opposés 2₁-2₂, 2₃-2₄ du périmètre de la section transversale de ladite enveloppe.

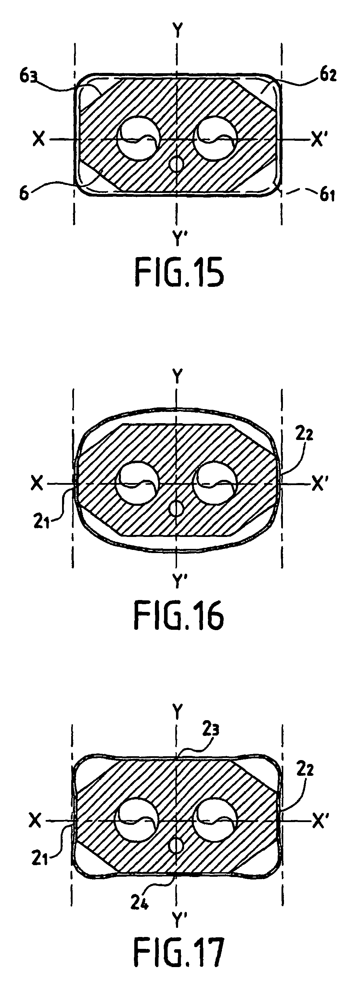

Sur les figures 15 à 17, ladite section transversale dudit gabarit centraliseur 6 a la forme d'un rectangle dont les angles sont tronqués en pans coupés 9,.

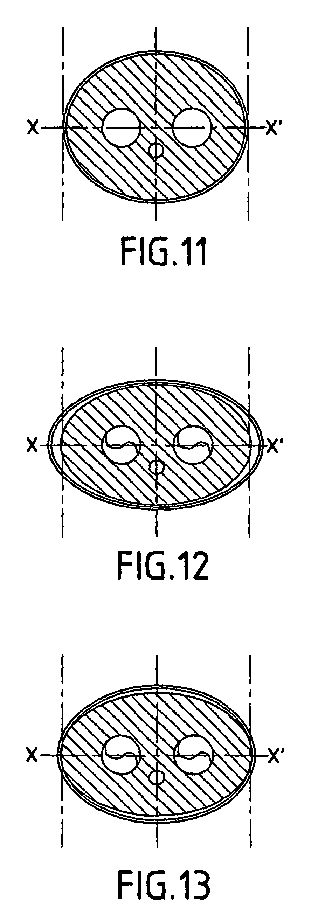

Sur les figures 12 et 13 et 15 à 17, le gabarit centraliseur présente une section transversale dont le périmètre s'inscrit à l'intérieur d'une première figure géométrique 6, de forme d'un rectangle à bords arrondis (figure 15), de forme ovale (figure 12), qui est homothétique par rapport à la figure géométrique définie par le périmètre de la section transversale de la cloison étanche avec laquelle il coopère.

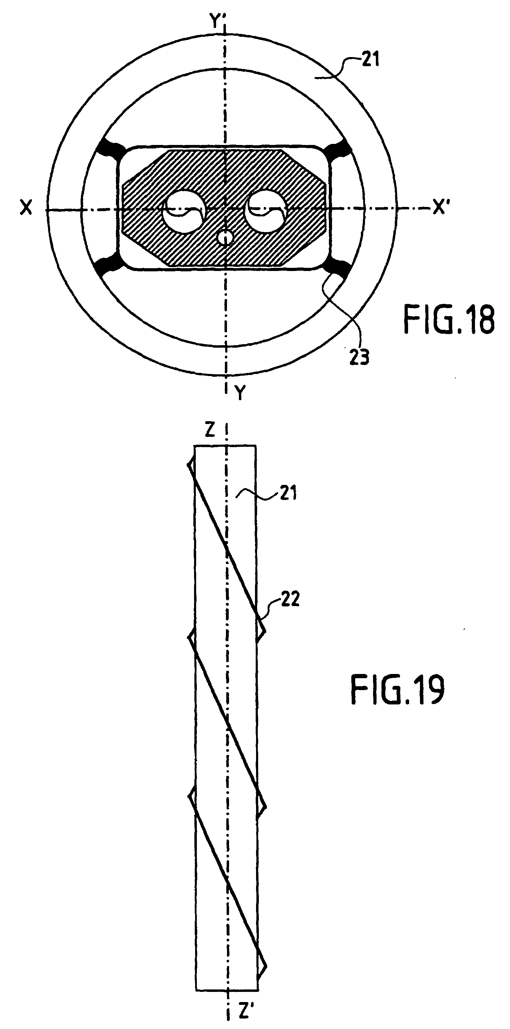

Sur les figures 16 et 17, on montre que le périmètre de la section transversale du gabarit centraliseur 6 est en retrait par rapport à celui de la cloison étanche et donc de l'enveloppe au repos (figure 11) et limite les déformations (figures 16 et 17) de ladite enveloppe par butée mécanique directe de celle-ci en au moins deux points opposés 2₁-2₂, 2₃-2₄ du périmètre de la section transversale de ladite enveloppe.

En cas de surpression de l'intérieur de l'enveloppe par rapport à l'extérieur (voir zone b figures 4 et 16), si l'enveloppe 2 n'est pas circulaire et présente une forme aplatie, notamment ovale ou rectangulaire avec un grand axe de symétrie XX' et un petit axe de symétrie YY' perpendiculaires entre eux et situés dans le plan de section transversale, le périmètre de la section transversale de l'enveloppe tend à se circulariser. Dans ces conditions, la butée mécanique et donc le contact de l'enveloppe avec ledit gabarit centraliseur se fait alors seulement en des points opposés 2₁, 2₂ de ladite enveloppe située sur le plus grand axe de symétrie XX', de sorte que l'expansion de ladite enveloppe selon le petit axe de symétrie XX' se trouve également limitée (voir zone b des figures 4 et 16) et la section transversale de ladite enveloppe peut ainsi rester de forme aplatie (non circulaire).

En revanche, en cas de surpression de l'extérieur de l'enveloppe par rapport à l'intérieur de l'enveloppe, la butée mécanique et le contact de l'enveloppe avec ledit gabarit centraliseur se fait à la fois en des points opposés 2₁, 2₂ de ladite enveloppe située sur le plus grand axe de symétrie XX' et en des points opposés 2₃, 2₄ de ladite enveloppe située sur le plus petit axe de symétrie YY' dans le plan de section transversale, de sorte que la contraction de ladite enveloppe se trouve limitée (voir zone d des figures 4 et 17). On évite ainsi une implosion éventuelle de l'enveloppe en ces points.

Le gabarit centraliseur 6 présente avantageusement à sa périphérie principalement dans les zones de contact avec l'enveloppe une surface de contact suffisamment large 6₄ de manière à éviter les endommagements de l'enveloppe extérieure 2 lorsque le bundle respire. En revanche, la partie centrale du gabarit centraliseur peut être évidée 6₅, comme représenté figure 20, de manière à minimiser les ponts thermiques tout en conservant suffisamment de matière pour conserver au gabarit centraliseur une rigidité suffisante.

Les gabarits conformateurs 7 sont des pièces rigides cylindriques d'épaisseur plus petite, dont la fonction est, comme les cloisons étanches 5, de fixer la forme de la section transversale de l'enveloppe à leur niveau, cette section étant de préférence identique à celle imposée par la cloison étanche 5. La surface de contact 7₂ de la tranche périphérique du cylindre constitutif de la pièce, est donc , comme représenté figure 20, de hauteur moins importante que pour les gabarits centraliseurs ou les cloisons étanches de manière à minimiser les ponts thermiques, mais comme les cloisons étanches, elles sont rendues solidaires de l'enveloppe par collage ou soudage, et de préférence par cerclage (7₂) avec un feuillard de cerclage extérieur à l'enveloppe 18.

Le gabarit conformateur 7 n'est pas étanche car il comporte des ouvertures 7₁ qui laissent passer le matériau isolant, surtout lors de la phase de remplissage de matériau isolant, ce dernier étant fluide ou pâteux et présentant de préférence une viscosité très faible. Le gabarit conformateur 7 est solidaire des conduites internes 4 et maintient à distance fixe l'une de l'autre comme les cloisons étanches 5 et les gabarits centraliseurs 6. Le gabarit conformateur maintient en outre les conduites internes à distances fixes de l'enveloppe au niveau du gabarit conformateur.

Les gabarits conformateurs successifs sont espacés de préférence d'une distance de 5 à 50 mètres, de préférence de 5 à 20 mètres, la surface externe desdites pièces rigides cylindriques constituant ladite cloison étanche 5 ou ledit gabarit conformateur 7 sont en contact continu avec ladite enveloppe 2. Il faut comprendre par l'expression « contact continu » que ledit contact est réalisé sur toute la circonférence du périmètre de la section transversale de ladite enveloppe.

Sur les figures 5, 6 et 7, on a représenté à chacun des niveaux a, b, d et e respectivement pour chacun des types d'enveloppes circulaires ovales ou rectangulaires, et de manière considérablement amplifiée, des déformations engendrées par la pression différentielle entre l'intérieur du dispositif et le milieu ambiant entre deux cloisons étanches localisées respectivement aux niveaux a et e. La pression différentielle s'exerçant sur l'enveloppe 2 est due à la différence de densité du matériau isolant par rapport à l'eau de mer, ladite densité étant en général aux alentours de 0.8 à 0.85. Ainsi, à titre d'illustration, si l'on considère une portion de colonne montante 11 de 100m, pour un matériau isolant de densité 0.8, la pression différentielle entre le haut et le bas sera de 0.2Mpa, la partie basse (niveau d figure 4) de ladite colonne montante se trouvant en dépression, tandis que la partie haute se trouvera en surpression. II en résultera une déformation 12 de l'enveloppe extérieure 2 dont le résultat est sensiblement comparable dans chacune des configurations selon les figures 5, 6 et 7. La dépression en partie basse aura tendance à contracter l'enveloppe, comme illustré entre le plan e et le plan d, où la section est minimale, pour ensuite croître vers un maximum en b, puis décroître vers la section nominale imposée par le diaphragme 11. Selon le type de bundle, les déformations sont illustrées dans les plans a-b-c-d-e relatifs aux figures 5, 6 et 7.

Ces déformations de l'enveloppe externe vont engendrer des transferts vers le haut du complexe isolant semi-fluide ou pâteux, ce qui risque de nuire au bon comportement de l'isolant, voire d'en détruire la structure, car ce type de matériau d'isolation sujet à migration reste fragile et supporte mal les cisaillements internes créés par les migrations internes.

Dans le cas de la figure 5 représentant l'enveloppe circulaire en matériau thermoplastique l'expansion en b est importante, mais la contraction observée en d reste très faible, car la dépression existante a des répercussions moindres sur la forme finale.

A ce phénomène de transfert de fluide vers le haut, vient s'ajouter le phénomène de respiration décrit précédemment, dû aux variations de température des conduites internes lesquelles engendrent des variations de volumes, principalement au sein du complexe isolant, qui viennent amplifier les déformations, surtout dans la partie haute.

Lorsqu'il se produit un transfert de matière dudit revêtement isolant par migration dans ladite direction longitudinale ZZ', en général dans le sens de bas en haut dans le cas où ladite conduite est une colonne montante ou riser ou en déclivité, la forme du périmètre de la section transversale de ladite enveloppe n'est pas uniforme le long de l'axe longitudinal de symétrie ZZ' et ladite forme fixe du périmètre de la section transversale de ladite cloison étanche correspond alors à la forme de la section transversale de ladite enveloppe, avant ledit transfert de matière, c'est à dire lorsque ledit revêtement isolant est uniformément réparti autour de ladite conduite le long dudit axe longitudinal ZZ' et que ladite forme de la section transversale de l'enveloppe le long dudit axe longitudinal est également uniforme.

Lorsque se produisent des déformations de l'enveloppe et de la forme de la surface extérieure du revêtement isolant, la forme du périmètre de ladite section transversale de l'enveloppe reste en général symétrique par rapport à deuxdits axes XX', YY' perpendiculaires entre eux et perpendiculaires audit axe longitudinal de symétrie ZZ' de l'enveloppe.

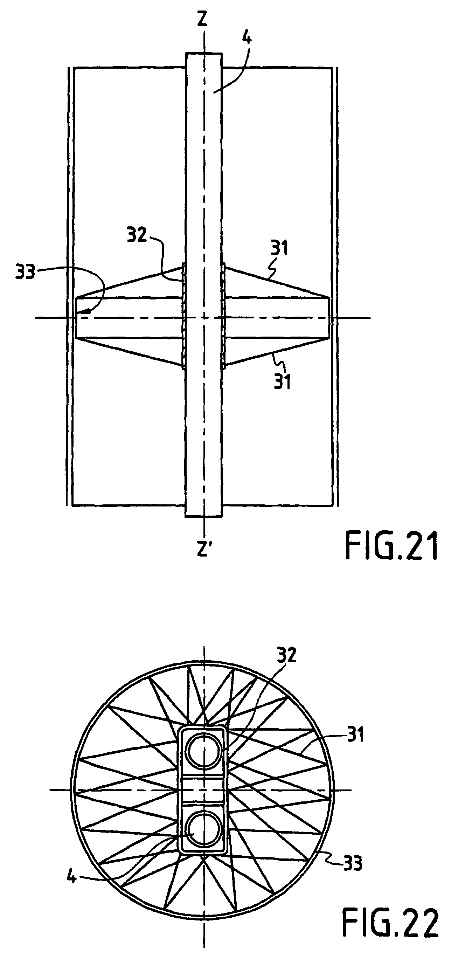

Dans un mode de réalisation préféré, les gabarits centraliseurs et conformateurs sont avantageusement réalisés de manière similaire à une roue de bicyclette comme représenté sur les figures 21-24. Ledit gabarit est constitué d'une jante, d'un moyeu et de rayons réalisés en enroulement filamentaire, de préférence en continu.

On entend par enroulement filamentaire, un produit obtenu à partir d'une fibre résistante, de préférence une fibre de carbone ou une fibre de verre, imprégnée d'un produit composite, par exemple une résine époxy, et mis en place, de préférence sous tension, de manière continue, avant que la résine ne soit réticulée.

Ladite jante et ledit moyen sont fabriqués, de préférence de manière continue, à partir d'un feuillard plat en acier.

On fabrique à partir d'un feuillard plus large et on le plie selon la forme, par exemple rectangulaire, représentée sur la figure 21. Des raidisseurs complémentaires (non représentés) sont avantageusement ajoutés pour donner à l'ensemble une grande rigidité. La jante 33 et son moyeu 32 sont positionnés l'un par rapport à l'autre au moyen d'un dispositif provisoire, non représenté, et le ruban composite imprégné de résine, maintenu en tension est passé successivement autour d'un élément d'accrochage de la jante, puis d'un élément d'accrochage du moyeu, et ainsi de suite, de manière à constituer l'enchevêtrement de rayons qui constituera le liaisonnement résistant entre ladite jante et ledit moyeu. On notera que le mode de fonctionnement mécanique est similaire à celui d'une roue de bicyclette, car, sous charge verticale, la jante travaille en compression, mais l'intégralité des rayons travaille en tension. La technique de fabrication d'un ruban composite imprégné de résine est connue sous le nom anglo-saxon de pulltrusion, ce qui signifie "traction-extrusion" et sera avantageusement associée à un robot manipulateur qui effectuera de manière automatique le "tricotage" autour des éléments d'accrochage support de la jante et du moyeu pour constituer les rayons.

Le gabarit centraliseur-conformateur a été représenté sous une forme circulaire, mais sa forme peut aussi être sensiblement ovale ou rectangulaire à bords arrondis, mais dans ce cas la répartition des rayons ne sera plus uniforme, certaines zones devant être renforcées pour présenter une résistance suffisante dans toutes les directions.

Lorsque le dispositif selon l'invention présente une enveloppe de forme à section transversale de forme rectangulaire, cette forme est sujette à de fortes contraintes dans les zones de forte agitation proches de la surface. C'est pourquoi dans ce cas, il est avantageux de prévoir comme représenté sur les figures 18 et 19 un écran extérieur 21 lui conférant une forme circulaire, ledit écran étant en outre lui-même équipé à sa surface externe d'un élément de stabilisation antivortex de forme hélicoïdale 22. Le dispositif selon l'invention à enveloppe de section transversale rectangulaire, présenté sur la figure 18, est rendu solidaire de l'écran extérieur par des liaisons souples de type caoutchouc 23.

Les cloisons étanches, gabarits centraliseurs 6 et conformateurs 7 sont réalisées de préférence à partir de matériaux résistants et peu conducteurs de la chaleur, par exemple en matériaux thermoplastiques, renforcés ou non, en matériaux composites, ou même partiellement en métal, et avantageusement en une combinaison de ces différentes technologies.

Les plus grands diamètres des cloisons étanches, gabarits centraliseurs et gabarits conformateurs de leur section transversale de l'ordre de 1 m à 1,5 m, voire 2m, conformément à la taille globale des dispositifs selon l'invention correspondant également à des épaisseurs d'enveloppe de l'ordre de 15 à 40mm dans le cas d'enveloppes souples en thermoplastiques de type polyéthylène ou polypropylène et de 5 à 8mm dans le cas d'enveloppe semi rigide en acier ou en matériau composite, et des diamètres de conduites de l'ordre de 100mm à 400mm.

L'assemblage de tronçons unitaires 11 pour former un faisceau continu de plusieurs kilomètres peut s'effectuer par exemple de la manière suivante. On fabrique d'abord un premier tronçon, par exemple de 100m de longueur tel que représenté sur la figure 14 et équipé de ses cloisons étanches. Pour cela, on fabrique les conduites internes à partir de longueurs de tube de 12m raboutés par soudage, puis on installe, au fur et à mesure, les gabarits centraliseurs et les gabarits conformateurs, lesdits gabarits centraliseurs et gabarits conformateurs étant équipés par exemple de roulettes ou patins en partie basse. On insère alors l'ensemble à l'intérieur de l'enveloppe externe 2 en poussant cette dernière qui a été préfabriquée en un seul élément ou par raboutage d'éléments unitaires d'enveloppe de 12m, 24m ou plus, ledit raboutage s'effectuant de préférence loin de l'extrémité des conduites intérieures. Lorsque l'enveloppe externe est en place, on installe lesdites cloisons étanches 5 à chaque extrémité que l'on solidarise à l'enveloppe 2 et aux conduites 4 et on injecte le matériau isolant entre les cloisons étanches. On aura pris soin de laisser dépasser, du côté que l'on doit rallonger, l'enveloppe externe d'une certaine longueur, par exemple 20cm, et les conduites internes 4, par exemple, la première de 1m et la seconde de 1.5m, de manière à ce que les zones où l'on devra effectuer les raccordements par soudage soient décalées les unes des autres, ce qui permettra l'accès aux équipements de soudage et de contrôle. On tire alors le tronçon préfabriqué vers la mer pour libérer la zone de travail et on fabrique alors le tronçon suivant de manière similaire. Lorsque l'on met en place en place l'enveloppe externe autour du nouveau tronçon, elle est mise en face à face avec l'enveloppe en attente à une extrémité du tronçon précédent puis soudée. A l'autre extrémité, on installe une cloison étanche 5 que l'on solidarise à ladite enveloppe extérieure et aux conduites, puis on procède au remplissage de matériau isolant. On aura pris soin de laisser dépasser les conduites 4 avec un décalage suffisant par rapport à l'enveloppe externe comme décrit ci-dessus, de manière à faciliter les opérations de soudage et de contrôle, et l'on recommence l'opération jusqu'à l'obtention d'une longueur suffisante.

Si des câbles électriques ou des ombilicaux doivent être installés au sein du dispositif, on ajoutera une conduite supplémentaire jouant le rôle de fourreau et le câble ne sera tiré à travers ledit fourreau qu'après assemblage complet de la longueur complète de faisceau, lequel peut atteindre plusieurs kilomètres.

Dans une version préférée de l'invention, le complexe isolant est avantageusement réalisé à partir d'un gel réticulé présentant une grande stabilité, par exemple un composé de type polyuréthanne, dont la réticulation créant un gel sensiblement continu, joue le rôle de matrice, au sein duquel se trouve, en dispersion, un liquide tel une paraffine, un gazole, ou tout autre composé présentant un niveau de conductibilité thermique faible. On incorporera avantageusement encore au complexe, lors de sa fabrication, des composés solides, par exemple des micro-sphères de verre, dont le rôle est de diminuer la conductivité thermique du complexe, ou des matrices fibreuses dont le rôle est de réduire la convexion des particules restant à l'état liquide au sein dudit complexe isolant.

Les divers composants sont alors mélangés puis malaxé de manière énergique pour obtenir un composé homogène qui peut alors être injecté sous forme liquide et remplir ainsi l'intégralité du tronçon limité par deux diaphragmes étanches consécutifs. Préalablement à l'injection du matériau isolant fluide, on tirera avantageusement au vide de tronçon, de manière à éviter toute poche de gaz résiduel. Le vide créé ne manquera pas de faire imploser localement l'enveloppe, mais cette dernière reprendra sa forme initiale dès que l'on aura injecté la quantité nécessaire et suffisante de fluide. On aura bien sûr pris la précaution de dimensionner les conformateurs et centraliseurs, et de les rapprocher suffisamment pour que cette implosion temporaire soit sans répercussion significative sur l'intégrité de l'enveloppe extérieure.

Le produit homogénéisé ainsi injecté se trouve à l'état liquide lors de la phase de remplissage et après réticulation du liant, se transforme en une matrice gélifiée au sein de laquelle se trouve emprisonnée le ou les autres constituants restant à l'état liquide ou eux aussi à l'état de gel, ce qui réduit de façon très importante les phénomènes de convexion.

On choisira de préférence les composants liants, par exemple les polyuréthannes, de manière à ce que la polymérisation ne démarre qu'après plusieurs heures, par exemple une durée minimale 6 à 8 heures, ce qui permet, avec des moyens de mélangeage et de pompage raisonnables de réaliser dans ce laps de temps des dispositifs de 1 m de diamètre en tronçons unitaires de 100m environ.

On pourrait tout aussi bien réduire cette longueur unitaire ou l'augmenter en considérant des moyens d'injection plus faibles ou plus importants, ou encore utiliser des composants, additionnés ou non de retardateurs, dont le temps d'ouverture, c'est à dire le temps pendant lequel il peut être mis en oeuvre, est plus faible ou plus important, l'essentiel étant que l'intégralité de l'opération d'injection doit être terminée avant que la réaction de gélification ou de réticulation du liant ne soit initiée de manière significative.

En procédant ainsi, on simplifie de manière considérable le remplissage du bundle, car on évite les tâches compliquées de l'art antérieur qui consistaient à installer des matrices absorbantes et à faire percoler le fluide isolant, ou encore à injecter à chaud un complexe isolant tel de la paraffine, sujet à rétractation importante lorsqu'il passe de l'état liquide à l'état solide.

## Revendications

1. Dispositif d'isolation thermique (1) d'au moins une conduite sous-marine (4) comportant :
- un revêtement isolant thermique (3) entourant ladite ou lesdites conduite(s) (3),
- ledit revêtement étant recouvert d'une enveloppe étanche de protection (2), et
- ladite enveloppe étant de forme tubulaire et présentant un axe longitudinal de symétrie (ZZ'),
- ledit revêtement isolant (3) comprenant un matériau sujet à migration, et ladite enveloppe (2) étant constituée d'un matériau souple ou semi-rigide apte à rester au contact de la surface extérieure dudit revêtement isolant (3) lorsque celui-ci se déforme,
- au moins deux cloisons transversales étanches (5), chacune desdites cloisons étant constituées d'une structure rigide fermée traversée par la ou lesdites conduite(s), et solidaire de celle(s)-ci, et solidaire, à sa périphérie, de ladite enveloppe,
**caractérisé en ce qu'**il comprend:
- au moins un gabarit centraliseur (6), de préférence une pluralité de gabarits centraliseurs (6), disposé(s), de préférence à intervalles réguliers, entre deux dites cloisons étanches (5) successives le long dudit axe longitudinal (ZZ'), chaque gabarit centraliseur (6) étant constitué d'une pièce rigide solidaire de la ou desdites conduite(s) et présentant une forme qui autorise un déplacement radial limité de ladite enveloppe (2), en contraction et en expansion, au regard dudit gabarit centraliseur (6), ladite pièce rigide dudit gabarit centraliseur (6) présentant une surface externe (6₄), de préférence une surface externe (6₄) cylindrique, dont le périmètre de la section transversale est en retrait par rapport à celui de ladite cloison étanche (5), et limite les déformations de ladite enveloppe par butée mécanique directe de celle-ci sur ladite pièce rigide (6), de préférence par butée mécanique en au moins deux points opposés (2₁-2₂ , 2₃-2₄) du périmètre de la section transversale de ladite enveloppe (2).

2. Dispositif d'isolation thermique selon la revendication 1, **caractérisé en ce que** chaque dite cloison transversale étanche (5) est constituée d'une pièce cylindrique qui présente une section transversale dont le périmètre présente la même forme fixe que celui de ladite section transversale de l'enveloppe (2) en l'absence de déformation.

3. Dispositif selon l'une des revendications 1 à 2, **caractérisé en ce que** lesdites cloisons transversales (5) sont espacées, de préférence à intervalles réguliers, le long dudit axe longitudinal (ZZ') d'une distance de 50 à 200 mètres.

4. Dispositif selon l'une des revendications 1 à 3, **caractérisé en ce que** ledit déplacement de l'enveloppe (2) en regard d'undit gabarit centraliseur (6), représente une variation de 0,1 à 10 %, de préférence de 0,1 à 5 %, de la distance entre deux points opposés (2₁-2₂, 2₃-2₄) du périmètre de la section transversale de ladite enveloppe.

5. Dispositif selon l'une des revendications 1 à 4, **caractérisé en ce que** ladite pièce rigide constituant ledit gabarit centraliseur (6) présente une partie de sa surface externe suffisamment en retrait par rapport à la surface de l'enveloppe, et/ou présente des perforations le traversant, de manière à créer un espace (6₂) qui permette le transfert de matière constitutive dudit revêtement isolant (2) à travers ledit gabarit centraliseur (6).

6. Dispositif selon la revendication 5, **caractérisé en ce que** ladite section transversale dudit gabarit centraliseur (6) a la forme d'un rectangle dont les angles sont tronqués en pans coupés (6₃).

7. Dispositif selon l'une des revendications 1 à 6, **caractérisé en ce qu'**il comporte une pluralité dedits gabarits centraliseurs (6), et deux gabarits centraliseurs successifs sont espacés le long dudit axe longitudinal (ZZ') de l'enveloppe d'une distance de 2 à 5 mètres.

8. Dispositif selon l'une des revendications 1 à 7, **caractérisé en ce qu'**il comprend au moins un, de préférence une pluralité, de gabarit(s) conformateur(s) (7) constitué(s) d'une structure rigide solidaire de la ou desdites conduite(s) et traversée par celle(s)-ci et solidaire de ladite enveloppe (2) à sa périphérie, disposé(s) entre deux dites cloisons étanches (5) successives, ledit gabarit conformateur présentant des ouvertures (7₁) permettant le passage de la matière constitutive dudit revêtement isolant (3) à travers ledit gabarit conformateur (7).

9. Dispositif selon la revendication 8, **caractérisé en ce que** ladite structure ouverte dudit gabarit conformateur (7) est constitué d'une pièce cylindrique qui présente une section transversale dont le périmètre s'inscrit dans une figure géométrique identique à la figure géométrique définie par la forme du périmètre de la section transversale de ladite cloison étanche (5).

10. Dispositif selon la revendication 8 ou 9, **caractérisé en ce qu'**il comporte une pluralité de gabarits conformateurs disposés le long dudit axe longitudinal (ZZ') de l'enveloppe de préférence à intervalles réguliers, deux gabarits conformateurs (7) successifs étant espacés de préférence encore de 20 à 50 mètres.

11. Dispositif selon l'une des revendications 1 à 10, **caractérisé en ce que** la ladite pièce rigide constituant undit gabarit centraliseur ou undit gabarit conformateur comprend une structure ouverte formée par des rayons (31) disposés radialement entre un moyeu (32) constitué d'une enceinte cylindrique entourant la ou lesdites conduite(s) et une jante (33) constituant la surface de contact dudit gabarit avec ladite enveloppe.

12. Dispositif selon une des revendications 1 à 11, **caractérisé en ce que en ce que** ladite enveloppe (2) définit un périmètre présentant deux axes de symétrie (XX') et (YY') perpendiculaires entre eux, et audit axe longitudinal (ZZ'),

13. Dispositif selon la revendication 12, **caractérisé en ce que** ladite section transversale de l'enveloppe est de forme circulaire.

14. Dispositif selon la revendication 12, **caractérisé en ce que** ladite section transversale de l'enveloppe est de forme ovale.

15. Dispositif selon la revendication 12, **caractérisé en ce que** ladite section transversale de l'enveloppe est de forme rectangulaire, de préférence avec des angles arrondis.

16. Dispositif d'isolation thermique d'un faisceau de conduites sous-marines, **caractérisé en ce qu'**il comprend un dispositif selon l'une des revendications 1 à 15 comprenant au moins deux dites conduites sous-marines disposées en parallèle.

17. Dispositif selon la revendication 16, **caractérisé en ce que** lesdites cloisons étanches (5), gabarit conformateur (7) et gabarit centraliseur (6) maintiennent les au moins deux dites conduites sous-marine (4) à distance fixe l'une de l'autre.

18. Dispositif d'isolation thermique unitaire utile pour obtenir un dispositif selon l'une des revendications 1 à 17 par assemblage bout à bout desdits dispositifs d'isolation thermique unitaires, **caractérisé en ce qu'**il comprend :
• un ou des éléments unitaires de conduite sous-marine à la place de la ou des conduite(s) sous-marines, et
• un revêtement isolant (3), une dite enveloppe de protection (2), tels que définis dans les revendications 1 à 17, chaque dit élément unitaire (4) comprenant à au moins une de ses extrémités ou à chacune de ses extrémités une dite cloison étanche (5), et desdits gabarits centraliseurs (6), et de préférence des gabarits conformateurs (7) tels que définis dans les revendications 1 à 17 disposé entre deux cloisons étanches successives.

19. Procédé d'isolation thermique d'au moins une conduite sous marine **caractérisé en ce qu'**on réalise des dispositifs d'isolation thermique unitaire selon la revendication 18, et on les assemble bout à bout.

20. Procédé selon la revendication 19, **caractérisé en ce que** ledit matériau isolant est un complexe comprenant différents composants qui sont mélangés, puis injectés à l'état liquide au sein des différents compartiments délimités par deux dites cloisons étanches successives et ledit matériau isolant se transforme en gel par réticulation d'au moins un de ses dits composants.

21. Dispositif de liaison fond-surface comprenant une conduite sous-marine de type riser isolée thermiquement par un procédé selon l'une des revendications 19 ou 20.

## Claims

1. Heat insulation device (1) for at least one sub-marine pipe (4) comprising :
- a heat insulation covering (3) surrounding said pipe(s) (4),
- said covering being covered with a sealed protective envelope (2), and
- said envelope having a tubular shape and a longitudinal axis of symmetry (ZZ'),
- said insulation covering (3) including a material subject to migration and said envelope (2) being constituted by a flexible or semi-rigid material able to remain in contact with the external surface of said insulation covering (3) when the latter warps, and
- at least two sealed transversal partitions (5), each of said partitions being constituted by a closed rigid structure traversed by said pipe(s) and integral with the latter and integral at its periphery with said envelope,
said device being **characterised in that** it includes:
- at least one centralising jig (6) and preferably a plurality of centralising jigs (6) placed preferably at regular intervals between said two successive sealed partitions (5) along said longitudinal axis (ZZ'), each centralising jig (6) being constituted by a rigid piece integral with said pipe(s) and having a shape permitting a limited radial movement of said envelope (2) on contraction and on expansion with regard to said centralising jig (6), said rigid piece of said centralising jig (6) having an external surface (6₄) and preferaby an external cylindrical surface (6₄) in which the perimeter of the cross section stands back with respect to that of said sealed partition (5) and limits the warpings of said envelope by a direct mechanical stop thereof on said rigid piece (6), preferably by mechanical stop on at least two opposing points (2₁-2₂, 2₃-2₄) of the perimeter of the cross section of said envelope (2).

2. Heat insulation device according to claim 1, **characterised in that** each said sealed transversal partition (5) is constituted by a cylindrical piece having a cross section whose perimeter has the same fixed shape as that of said cross section of the envelope (2) in the absence of warping.

3. Device according to one of claims 1 to 2, **characterised in that** said transversal partitions (5) are spaced, preferably at regular intervals, along said longitudinal axis (ZZ') by a distance of between 50 and 200 metres.

4. Device according to one of claims 1 to 3, **characterised in that** said movement of the envelope (2) opposite said centralising jig (6) represents a variation of between 0.1 and 10% and preferably 0.1 to 5% of the distance between two opposing points (2₁ -2₂, 2₃ -2₄) of the perimeter of the cross section of said envelope.

5. Device according to one of claims 1 to 4, **characterised in that** said rigid piece constituting said centralising jig (6) has one portion of its external surface sufficiently standing back with respect to the surface of the envelope and/or has perforations traversing it so as to create a space (6₂) which allows the transfer of the material constituting said insulation covering (3) through said centralising jig (6).

6. Device according to claim 5, **characterised in that** said cross section of said centralising jig (6) has the shape of a rectangle whose angles are truncated into cants (6₃).

7. Device according to one of claims 1 to 6, **characterised in that** it comprises a plurality of said centralising jigs (6) and two successive centralising jigs are spaced along said longitudinal axis (ZZ') of the envelope by a distance of between 2 and 5 metres.

8. Device according to one of claims 1 to 7, **characterised in that** it includes at least one cooling jig (7) and preferably a plurality of cooling jigs (7) being constituted by a rigid structure integral with said pipe(s) and traversed by the latter and integral with said envelope (2) at its periphery and placed between said two successive sealed partitions (5), said cooling jig preferably having openings (7₁) allowing the passage of the material constituting said insulation covering (3) through said cooling jig (7).

9. Device according to claim 8, **characterised in that** said open structure of said cooling jig (7) includes a cylindrical piece having a cross section whose perimeter is inscribed in a geometrical figure identical to the geometrical figure defined by the shape of the perimeter of the cross section of said sealed partition (5).

10. Device according to claim 8 or 9, **characterised in that** it includes a plurality of cooling jigs placed along said longitudinal axis (ZZ') of the envelope preferably at regular intervals, two successive cooling jigs (7) being further spaced by between 20 and 50 metres.

11. Device according to one of claims 1 to 10, **characterised in that** said rigid piece constituting said centralising jig or said cooling jig includes an open structure formed by spokes (31) arranged radially between a hub (32) constituted by a cylindrical chamber surrounding said pipe(s) and a wheel rim (33) constituting the contact surface of said jig with said envelope.

12. Device according to one of claims 1 to 11, **characterised in that** said envelope (2) defines a perimeter having two axes of symmetry (XX') and (YY') perpendicular to each other and to said longitudinal axis (ZZ').

13. Device according to claims 12, **characterised in that** the shape of said cross section of the envelope is circular.

14. Device according to claim 12, **characterised in that** the shape of said cross section of the envelope is oval.

15. Device according to claim 12, **characterised in that** the shape of said cross section of the envelope is rectangular and preferably with rounded angles.

16. Device for heat-insulating a bundle of sub-marine pipes, **characterised in that** it includes a device according to one of claims 1 to 15 including at least two of said sub-marine pipes placed in parallel.

17. Device according to claim 16, **characterised in that** said sealed partitions (5), the cooling jig (7) and centralising jig (6) keep at least two of said sub-marine pipes (4) at a fixed distance from each other.

18. Working unit heat insulation device so as to obtain a device according to one of claims 1 to 17 via the end-to-end assembling of said unit heat insulation devices, **characterised in that** it includes :
• sub-marine pipe unit element(s) instead of said sub-marine pipe(s), and
• an insulation covering (3), said protective envelope (2) as defined in claims 1 to 17, each said unit element (4) including at, at least one of its extremities or at each of its extremities, said sealed partition (5) and said centralising jigs (6) and preferably cooling jigs (7) as defined in claims 1 to 17 and disposed between two successive sealed partitions.

19. Method for heat-insulating at least one sub-marine pipe, **characterised in that** heat insulation devices are embodied according to claim 18 and assembled end-to-end.

20. Method according to claim 19, **characterised in that** said insulation material is a complex including various components which are mixed and then injected in a liquid state into the various compartments delimited by two of said successive sealed partitions and said insulation material is transformed into a gel via the reticulation, of at least one of its components.

21. Method of the bottom/surface link comprising a submarine pipe of the riser type that is heat insulated by a method according to one of claims 19 or 20.

## Patentansprüche

1. Vorrichtung (1) zur Wärmeisolation von wenigstens einer Unterwasserleitung (4) mit:
- einem wärmeisolierenden Mantel (3), welcher die Leitung oder Leitungen (4) umgibt,
- wobei der Mantel von einer dichten Schutzhülle (2) bedeckt ist, und
- wobei die Hülle röhrenförmig ausgebildet ist und eine Symmetrielängsachse (ZZ') aufweist,
- wobei der isolierende Mantel (3) ein Material enthält, das Migration ausgesetzt ist, und wobei die Hülle (2) aus einem nachgiebigen oder halbstarren Material besteht, das geeignet ist, mit der Außenfläche des isolierenden Mantels (3) in Kontakt zu bleiben, wenn sich dieser verformt,
- wenigstens zwei dichten querverlaufenden Trennwänden (5), wobei eine jede der Trennwände von einer starren, geschlossenen Struktur gebildet ist, die von der Leitung oder den Leitungen durchquert wird und die mit dieser bzw. diesen und an ihrem Umfang mit der Hülle fest verbunden ist,
**dadurch gekennzeichnet, dass** sie folgendes aufweist:
- wenigstens eine Zentralisiervorrichtung (6), vorzugsweise eine Vielzahl von Zentralisiervorrichtungen (6), die vorzugsweise in gleichmäßigen Abständen zwischen zwei aufeinanderfolgenden dichten Trennwänden (5) entlang der Längsachse (ZZ') angeordnet sind, wobei jede Zentralisiervorrichtung (6) aus einem starren Teil besteht, das mit der oder den Leitung(en) fest verbunden ist, und eine Form aufweist, die eine begrenzte radiale Zusammenziehungs- und Ausdehnungsbewegung der Hülle (2) gegenüber der Zentralisiervorrichtung (6) gestattet, wobei das starre Teil der Zentralisiervorrichtung (6) eine Außenfläche (6₄), vorzugsweise eine zylindrische Außenfläche (6₄) aufweist, deren Umfang des Querschnitts gegenüber demjenigen der dichten Trennwand (5) zurücktritt und die Verformungen der Hülle durch direkten mechanischen Anschlag dieser an dem starren Teil (6), vorzugsweise durch mechanischen Anschlag an wenigstens zwei gegenüberliegenden Punkten (2₁-2₂, 2₃-2₄) des Umfangs des Querschnitts der Hülle (2) begrenzt.

2. Vorrichtung zur Wärmeisolation nach Anspruch 1, **dadurch gekennzeichnet, dass** jede querverlaufende dichte Trennwand (5) von einem zylindrischen Teil gebildet ist, das einen Querschnitt aufweist, dessen Umfang die gleiche feste Form wie derjenige des Querschnitts der Hülle (2) ohne Verformung aufweist.

3. Vorrichtung nach einem der Ansprüche 1 bis 2, **dadurch gekennzeichnet, dass** die querverlaufenden Trennwände (5) vorzugsweise in gleichmäßigen Abständen entlang der Längsachse (ZZ') um einen Abstand von 50 bis 200 Metern beabstandet sind.

4. Vorrichtung nach einem der Ansprüche 1 bis 3, **dadurch gekennzeichnet, dass** die Bewegung der Hülle (2) gegenüber einer Zentralisiervorrichtung (6) eine Änderung von 0,1 bis 10%, vorzugsweise von 0,1 bis 5 % des Abstands zwischen zwei gegenüberliegenden Punkten (2₁-2₂, 2₃-2₄) des Umfangs des Querschnitts der Hülle darstellt.

5. Vorrichtung nach einem der Ansprüche 1 bis 4, **dadurch gekennzeichnet, dass** das die Zentralisiervorrichtung (6) bildende starre Teil einen Teil seiner Außenfläche aufweist, der gegenüber der Oberfläche der Hülle weit genug zurückliegt, und/oder sie durchquerende Perforierungen aufweist, so dass ein Raum (6₂) geschaffen wird, der den Transfer von den isolierenden Mantel (3) bildendem Material durch die Zentralisiervorrichtung (6) ermöglicht.

6. Vorrichtung nach Anspruch 5, **dadurch gekennzeichnet, dass** der Querschnitt der Zentralisiervorrichtung (6) die Form eines Rechtecks aufweist, dessen Ecken schräg abgestumpft (6₃) sind.

7. Vorrichtung nach einem der Ansprüche 1 bis 6, **dadurch gekennzeichnet, dass** sie eine Vielzahl von Zentralisiervorrichtungen (6) aufweist und dass zwei aufeinanderfolgende Zentralisiervorrichtungen entlang der Längsachse (ZZ') der Hülle um einen Abstand von 2 bis 5 Metern beabstandet sind.

8. Vorrichtung nach einem der Ansprüche 1 bis 7, **dadurch gekennzeichnet, dass** sie wenigstens eine Formungsvorrichtung (7), vorzugsweise eine Vielzahl von Formungsvorrichtungen (7) aufweist, die aus einer starren Struktur bestehen, welche mit der oder den Leitung(en) fest verbunden ist und von dieser bzw. diesen durchquert wird und an ihrem Umfang mit der Hülle fest verbunden ist, und die zwischen zwei aufeinanderfolgenden dichten Trennwänden (5) angeordnet sind, wobei die Formungsvorrichtung Öffnungen (7₁) aufweist, die den Durchgang des den isolierenden Mantel (3) bildenden Materials durch die Formungsvorrichtung (7) ermöglichen.

9. Vorrichtung nach Anspruch 8, **dadurch gekennzeichnet, dass** die offene Struktur der Formungsvorrichtung (7) von einem zylindrischen Teil gebildet ist, das einen Querschnitt aufweist, dessen Umfang sich in eine geometrische Figur einbeschreibt, welche mit der geometrischen Figur identisch ist, die durch die Form des Umfangs des Querschnitts der dichten Trennwand (5) definiert wird.

10. Vorrichtung nach Anspruch 8 oder 9, **dadurch gekennzeichnet, dass** sie eine Vielzahl von Formungsvorrichtungen aufweist, die entlang der Längsachse (ZZ') der Hülle vorzugsweise in gleichmäßigen Abständen angeordnet sind, wobei zwei aufeinanderfolgende Formungsvorrichtungen (7) vorzugsweise noch um 20 bis 50 Meter beabstandet sind.

11. Vorrichtung nach einem der Ansprüche 1 bis 10, **dadurch gekennzeichnet, dass** das starre Teil, welches eine Zentralisiervorrichtung oder eine Formungsvorrichtung bildet, eine offene Struktur aufweist, die von Speichen (31) gebildet ist, welche zwischen einer Nabe (32), die von einem die Leitung oder Leitungen umgebenden zylindrischen Raum gebildet ist, und einer Felge (33), welche die Kontaktfläche der Vorrichtung mit der Hülle bildet, radial angeordnet sind.

12. Vorrichtung nach einem der Ansprüche 1 bis 11, **dadurch gekennzeichnet, dass** die Hülle (2) einen Umfang definiert, der zwei Symmetrieachsen (XX') und (YY') aufweist, die zueinander und zu der genannten Längsachse (ZZ') senkrecht verlaufen.

13. Vorrichtung nach Anspruch 12, **dadurch gekennzeichnet, dass** der Querschnitt der Hülle kreisförmig ist.

14. Vorrichtung nach Anspruch 12, **dadurch gekennzeichnet, dass** der Querschnitt der Hülle oval ist.

15. Vorrichtung nach Anspruch 12, **dadurch gekennzeichnet, dass** der Querschnitt der Hülle rechteckig ist, vorzugsweise mit abgerundeten Ecken.

16. Vorrichtung zur Wärmeisolation eines Bündels von Unterwasserleitungen, **dadurch gekennzeichnet, dass** sie eine Vorrichtung nach einem der Ansprüche 1 bis 15 mit wenigstens zwei parallel angeordneten Unterwasserleitungen enthält.

17. Vorrichtung nach Anspruch 16, **dadurch gekennzeichnet, dass** die dichten Trennwände (5), die Formungsvorrichtung (7) und die Zentralisiervorrichtung (6) die wenigstens zwei Unterwasserleitungen (4) in festem Abstand voneinander halten.

18. Einheitswärmisolationsvorrichtung, die geeignet ist für den Erhalt einer Vorrichtung nach einem der Ansprüche 1 bis 17 durch Aneinanderfügen der Einheitswärmeisolationsvorrichtungen, **dadurch gekennzeichnet, dass** sie folgendes umfasst:
• ein oder mehrere Unterwasserleitungs-Einheitselement(e) anstelle der Unterwasserleitung oder Unterwasserleitungen, und
• einen isolierenden Mantel (3), eine Schutzhülle (2), wie sie in den Ansprüchen 1 bis 17 definiert sind, wobei jedes Einheitselement (4) an wenigstens einem seiner Enden oder an jedem seiner Enden eine dichte Trennwand (5) aufweist, sowie Zentralisiervorrichtungen (6) und vorzugsweise Formungsvorrichtungen (7), wie sie in den Ansprüchen 1 bis 17 definiert sind, die zwischen zwei aufeinanderfolgenden dichten Trennwänden angeordnet sind.

19. Verfahren zur Wärmeisolation von wenigstens einer Unterwasserleitung, **dadurch gekennzeichnet, dass** Einheitswärmeisolationsvorrichtungen nach Anspruch 18 ausgebildet und aneinander gefügt werden.

20. Verfahren nach Anspruch 19, **dadurch gekennzeichnet, dass** das isolierende Material ein Komplex mit unterschiedlichen Bestandteilen ist, die gemischt, anschließend in den verschiedenen, durch zwei aufeinanderfolgende dichte Trennwände begrenzten Abteilen in flüssigem Zustand gespritzt werden, und dass das isolierende Material sich durch Vernetzung von wenigstens einem seiner Bestandteile in Gel umwandelt.

21. Boden-Flächen-Verbindungsvorrichtung mit einer Unterwasserleitung vom Typ Riser, die durch ein Verfahren nach einem der Ansprüche 19 oder 20 wärmeisoliert wird.
